# EUROPEAN PATENT APPLICATION

(11) **EP 2 705 986 A1**
(43) Date of publication of application: **12.03.2014**
(21) Application number: 13180176.3
(22) Date of filing: 13.08.2013
(51) Int. Cl.: B60R 11/00, B60S 1/08, B60R 11/04

(54) **Retaining device for retaining a sensor device on a pane of a motor vehicle**

(30) Priority: 11.09.2012 DE 102012017942
(71) Applicant: Valeo Schalter und Sensoren GmbH, 74321 Bietigheim-Bissingen (DE)
(72) Inventor: Trebouet, Marcel, 78450 Chavenay (FR); Dorn, David, 93420 Villepinte (FR); Lacombe, Sebastien, 95280 Jouy-le-Moutier (FR); Robert, Caroline, 75017 Paris (FR)

(57) **Abstract**

The invention relates to a retaining device (5) for retaining a sensor device (3, 11, 43) on a pane of a motor vehicle, comprising a frame (1) for attaching to a surface of the pane, wherein the frame (1) is formed for receiving a sensor (3), in particular a rain and/or light sensor, and comprising a fastening element (4) for attaching the sensor (3) in the frame (1), wherein the retaining device (5) has a support (7) for attaching at least one further sensor (11, 43), wherein the support (7) has a coupling part (9), via which the support (7) can be attached to and/or in the frame (1).

## Description

The invention relates to a retaining device for retaining a sensor device on a pane of a motor vehicle. The retaining device includes a frame, which can be attached to a surface of the pane, namely for example with the aid of an adhesive. The frame is formed for receiving a sensor, in particular a rain and/or light sensor. In addition, the retaining device includes a fastening element formed for attaching the sensor in the frame. Preferably, the fastening element also serves for pressing the sensor against the pane.

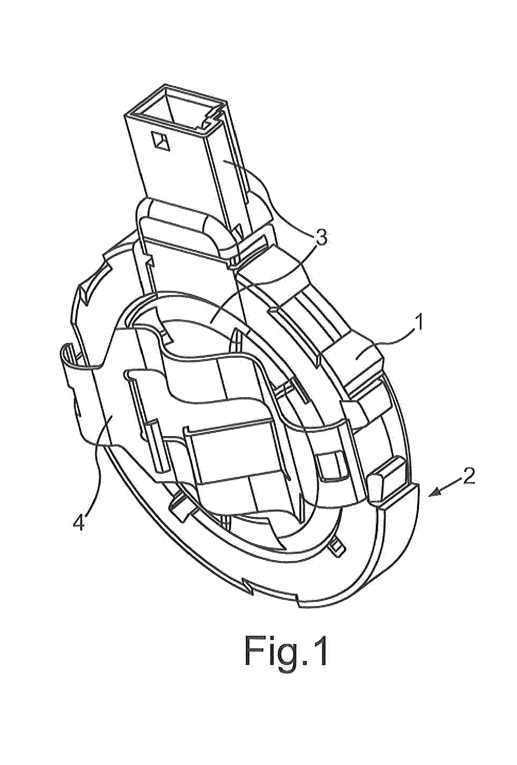

Retaining devices for attaching a sensor to the surface of a windscreen of a vehicle are already prior art. For example, it is known to place a rain sensor or else a light sensor directly on the windscreen. For this purpose, in the prior art, a retaining device is employed, which has an annular frame. Then, this frame can be adhered to the windscreen, and the sensor can be inserted into this frame. For retaining the sensor in the frame as well as for pressing the sensor against the face of the windscreen, a resilient fastening element is used, which extends along the diameter of the frame and is connected to the frame. In this manner, the rain sensor or else the light sensor can be fixedly retained on the windscreen such that the front face of the sensor abuts all-over on the face of the windscreen. Such a known retaining device is exemplarily illustrated in Fig. 1. A frame 1 is adhered to the surface of the windscreen with its front side 2 in the interior of the motor vehicle. Then, a rain sensor 3 is inserted into this annular frame 1 and pressed against the windscreen, for instance via a gelatinous plate. On the backside, the sensor 3 is attached in the frame 1 by means of a fastening element 4. The fastening element 4 is a spring element, which is connected to the frame 1 on opposing sides of this frame 1, and thus extends along the diameter of the frame 1. The fastening element 4 presses the sensor 3 against the windscreen. An exemplary frame is for example known from the document EP 2 179 894 B1.

From the document US 2012/0013741 A1, a module is known, in which a plurality of different sensors is disposed. This module can be attached to the windscreen of a motor vehicle. Modular use is not possible.

Besides a rain and/or light sensor, in today's vehicles, further sensors are also employed, which are placed behind the windscreen. These different sensors can be attached to the windscreen via separate retainers. Alternatively, different sensors can also be disposed in a common housing, as it is proposed in the document US 2012/0013741 A1. However, depending on the selected equipment and variant of the vehicle, not all of the possible sensor types are employed in a motor vehicle, but only certain sensors. Thus, in an equipment variant of the vehicle, for example, only the rain sensor and a front camera can be employed, while both the rain sensor and the front camera as well as a further distance sensor such as for example a Lidar sensor in another equipment variant. In still further equipment variants, e.g. only the front camera can be selected. For different sensor types and equipment variants, then, various retainers have to be used, by means of which the sensors can be positioned on the windscreen. This all increases the costs in manufacture of vehicles.

It is an object of the invention to further develop a retaining device of the initially mentioned kind such that it is modularly employable for different equipment variants of the vehicle.

According to the invention, this object is solved by a retaining device with the features according to claim 1. Advantageous implementations of the invention are the subject matter of the dependent claims, of the description and of the figures.

A retaining device according to the invention is formed for retaining a sensor device on a pane of a motor vehicle. The retaining device has a frame, which can be attached, in particular adhered, to a surface of the pane. The frame is formed for receiving a sensor, in particular a rain and/or light sensor. The pane can e.g. be a windscreen. The retaining device also includes a fastening element, which is formed for attaching the sensor in the frame and preferably also for pressing the sensor against the pane. According to the invention, the retaining device includes a separate support, which is formed for attaching at least one further sensor and has a coupling part, via which the support can be attached to and/or in the frame. Preferably, the support can be reversibly detachably attached to and/or in the frame.

Thus, a support can additionally also be coupled to the frame for the sensor (in particular rain sensor), which serves for retaining at least one further sensor on the pane, namely for example a camera and/or an optical distance sensor such as for example a Lidar sensor. Thus, modularity with regard to the selection of different sensors for various equipment variants of the vehicle is allowed. In some equipment variants, namely, the frame can exclusively be employed for the one sensor, while the support can additionally also be attached in and/or to the frame in still other equipment variants, and thus at least a further sensor can also be retained on the pane via the frame. A still further possibility is in employing the support in all possible equipment variants and to fit it with different sensors or else even with no further sensor depending on the selected equipment variant. A further advantage is in that the already developed frames for rain sensors can be maintained or only have to be slightly reconfigured to allow attachment of the additional support.

In addition, the retaining device according to the invention has the advantage that simple subsequent upgrading of the vehicle with an additional sensor is possible without having to employ a new retaining device. For the purpose of retrofitting, the retaining device already present in the vehicle can be used.

Preferably, the frame is formed annularly - at least on its inner circumference. Then, a rain and/or light sensor can be inserted into such a frame and attached with the fastening element und pressed against the pane. Additionally or alternatively to the rain and/or light sensor, the coupling part of the support can also be inserted into the frame and be attached with the same fastening element from the backside such that the coupling part of the support is brought into abutment with the backside of the sensor.

Thus, in an embodiment, it can be provided that the frame is formed for receiving at least one region of the coupling part and the fastening element is also formed for attaching the coupling part in the frame. Therefore, further fastening elements for the support do not have to be provided, because the coupling part of the support can be attached in the frame with the same fastening element as the sensor. In addition, thus, a particularly compact retaining device is provided, in which the coupling part of the support is received in the frame and the at least one further sensor therefore is retained on the pane via the frame.

In an embodiment, the frame is formed for simultaneously receiving both the sensor and at least one region of the coupling part. The fastening element can also be formed for simultaneous attachment of the sensor and the coupling part in the frame. Thus, via one and the same frame, both the sensor, in particular rain and/or light sensor, and the at least one further sensor are retained.

It can also be provided that the frame is formed for optionally receiving the sensor or at least a region of the coupling part. Thus, modularity is allowed to the effect that in some equipment variants the sensor alone and in other equipment variants the support alone with at least one further sensor can be employed. This embodiment has the advantage that the already present frames do not have to be reconfigured and the support can be inserted into the frame instead of the sensor (rain sensor). For this purpose, only the coupling part is correspondingly adapted to the shape of the rain sensor such that the coupling part can be inserted into the frame and attached with the present fastening element.

Preferably, the support is integrally formed. This means that the coupling part is formed integrally with the remaining region of the support, to which the at least one further sensor can be attached.

Preferably, the coupling part is formed plate-shaped, in particular annularly or circularly. By such a configuration of the coupling part, the same part can be inserted into the frame without much effort and attached with the fastening element from the backside without having to provide a very large frame. Thus, the frame can be formed compact in the direction perpendicular to the pane.

Preferably, the support is attached to the pane exclusively via the frame without employing additional fastening means for attaching the support to the pane. Thus, the retaining device is particularly space-saving and compact.

However, alternatively, it can also be provided that a fastening part separate from the frame is employed for attaching the support. Optionally, the support can be connected to the vehicle headliner or vehicle roof via such a fastening part.

Preferably, the fastening element is resiliently formed. With such a spring element, the sensor (in particular rain and/or light sensor) can be effectively pressed against the pane and the coupling part of the support can thus also be reliably attached in the frame. Thus, vibrations of the support in operation of the vehicle can be prevented.

In an embodiment, it is provided that even in absence of the sensor in the frame, the coupling part and thus the support can be attached in and/or to the frame, in particular by means of the fastening element. This embodiment proves in particular advantageous if the frame is formed for simultaneously receiving both the sensor and the coupling part of the support. The coupling part and the frame can therefore be formed such that the coupling part can also be inserted into the frame and be fixed in the frame by means of the fastening element if there is no sensor in the frame. Thus, modularity is allowed to the effect that in some equipment variants the sensor can be employed, while in other equipment variants a sensor is not employed in the frame. In order to allows this, the coupling part can for example have at least one extension or arm, which extends towards the pane and thus perpendicularly to the surface of the pane and abuts an inner circumference of the frame in the frame and herein for example can be supported on a stop of the frame. Thus, this extension can extend perpendicularly to a plane of the frame. Additionally or alternatively to the extension, a circular or annular base body of the coupling part can also be supported on a front edge of the frame as a stop. If this extension and/or the base body are supported on the stop of the frame, the coupling part can be pressed towards the stop with the aid of the fastening element on the backside and thus be attached in the frame even without the sensor without the pane being contacted and mechanically stressed by the coupling part.

Preferably, the connection of the fastening element to the frame is effected by means of a locking connection. Such a locking connection is particularly stable and robust and additionally allows the compensation for manufacturing tolerances on the one hand; on the other hand, such a locking connection can also be particularly fast detached again, which proves particularly advantageous in particular in case of repair of the sensor device or else of the retaining device.

Preferably, the support has a plate-like retaining part connected to the coupling part - in particular integrally formed with the coupling part - which is formed for attaching the at least one further sensor to the support. Such a plate-like retaining part allows reliable retention of the at least one further sensor and even attachment of multiple sensors at the same time. Namely, basically, any sensors can be mounted on such a plate on the backside facing away from the frame and/or on the front side of the retaining part facing the frame, which for example can capture the environment in front of the vehicle through recesses in the retaining part. A plate-like and preferably flat retaining part is additionally particularly compact and allows the provision of a retaining device compact in vehicle longitudinal direction.

Preferably, the support - in particular the mentioned retaining part - is formed for retaining at least two sensors separate from the first sensor (rain and/or light sensor), in particular sensors of different type. Thus, the retaining device overall can retain at least three sensors on the pane of the vehicle and accordingly be employed for very different equipment variants of the vehicle.

Preferably, the support - in particular the retaining part - has fastening means for attaching the at least one further sensor, which include at least one locking element and/or at least one opening for a screw for attaching the at least one further sensor. The at least one locking element and/or the at least one opening can be provided on the plate-like retaining part, which is connected to the coupling part. The provision of a locking element and/or of an opening for the screw allows reversibly detachably attaching the at least one further sensor (e.g. a camera) to the support such that a particularly simple disassembly of the sensor is also possible. In this manner, the vehicle can also be subsequently upgraded with a further sensor by attaching the sensor to the support via the locking element and/or the screw in simple manner. Then, a new retaining device does not have to be employed, but the retaining device already present in the vehicle is used.

Preferably, the support - in particular the plate-like retaining part - has fastening means for attaching a camera. The camera can be a front camera, which captures images of the environmental region in front of the vehicle and identifies for example light sources of other vehicles and/or road signs and/or pedestrians based on the images. Depending on the identification of the external light sources, the frontal headlight device of the vehicle can then be controlled. However, such a front camera usually is not employed in all equipment variants of the vehicle, but only in selected variants. Thus, the support can be fitted or not with such a camera depending on the selected equipment variant. This is allowed in that the support has the fastening means, which serve for reversibly detachable attachment of the camera.

In the support, in particular in the plate-like retaining part, a recess for a lens of the camera is preferably formed. Here, it is in particular a through-opening, into which the lens of the camera can be inserted or else through which this lens can be put to be able to capture the environmental region in front of the motor vehicle, if the camera is for example disposed on the backside of the retaining part. By such a recess, the lens of the camera is particularly well protected from rearward light radiation, which comes from the side of the interior of the vehicle. In addition, the lens of the camera can therefore be oriented directly to the environmental region in front of the vehicle, while a housing of the camera is on the backside of the plate-like retaining part facing the vehicle interior.

It proves particularly advantageous if the support has a channel-shaped screen-off element, which protrudes from an edge of the recess and extends towards the pane in the assembled state of the retaining device. Such a channel-shaped screen-off element then serves for covering the lens of the camera against the interior of the vehicle. The channel-shaped screen-off element is preferably disposed around the field of view of the camera at least in certain areas, It can also span the distance between the pane on the one hand and the recess in the support or the lens of the camera on the other side. Thus, the screen-off element can extend between the recess on the one hand and the pane of the vehicle on the other hand and abut on the pane.

The support can also have fastening means for attaching an optical distance sensor different from the camera, namely in particular a Lidar sensor and/or a LED sensor.

It proves advantageous if the retaining device has an electrical connection common to the at least two sensors, which serves for connecting the sensors to the vehicle, namely for connecting the sensors for example to a power source and/or to a controller. Independently of the employed number of the sensors, thus, only a single connector and a single line or a single cable have to be employed in order to electrically connect the sensor device to the components on the side of the vehicle. The common connection can for example have multiple separate pins associated with different sensors. All of the pins are then contacted with one and the same connector.

The invention also relates to a sensor device with a retaining device according to the invention. Besides the retaining device, this sensor device can additionally also have at least one sensor, which can be attached to the pane of the vehicle by means of the retaining device.

A vehicle according to the invention has a retaining device according to the invention or a sensor device according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on individual preferred embodiments as well as with reference to the attached drawings.

There show:
- Fig. 1: in schematic and perspective illustration a retaining device with a rain sensor according to the prior art;
- Fig. 2: in schematic illustration a retaining device according to an embodiment of the invention;
- Fig. 3: in schematic illustration a plan view of the retaining device according to Fig. 2;
- Fig. 4: in schematic illustration the retaining device according to Fig. 2 from the bottom;
- Fig. 5: in schematic illustration a retaining device according to a further embodiment of the invention, which is formed for attaching two sensors to a pane;
- Fig. 6: in schematic illustration a camera, which can be attached to the retaining device according to Fig. 5;
- Fig. 7: in schematic illustration a rain and/or light sensor, which can be attached to the retaining device according to Fig. 5;
- Fig. 8: the retaining device according to Fig. 5, wherein another equipment variant without the rain and/or light sensor is selected;
- Fig. 9: in schematic illustration the retaining device according to Fig. 8, wherein another camera is attached to the retaining device;
- Fig. 10: in schematic illustration the other camera;
- Fig. 11: in schematic illustration a bottom of the retaining device according to Fig. 8;
- Fig. 12: in schematic illustration a retaining device according to still a further embodiment of the invention, wherein a first equipment variant is selected;
- Fig. 13 -15: different views of the retaining device according to Fig. 12, wherein another equipment variant is selected;

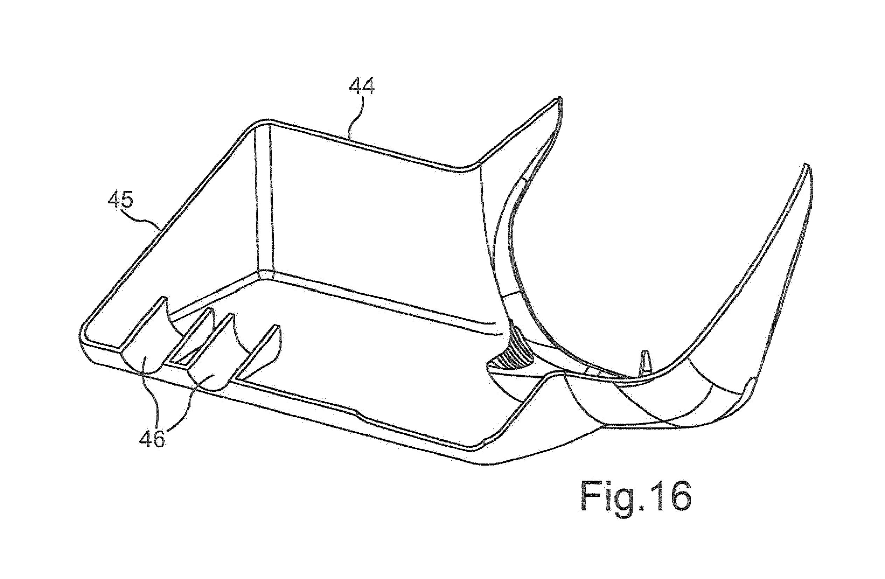

- Fig. 16: in schematic illustration a lid of the retaining device; and
- Fig. 17: in schematic illustration the retaining device according to Fig. 15 with the lid according to Fig. 16, wherein a rearview mirror is connected to the lid.

In the figures, identical or functionally identical elements are provided with the same reference characters.

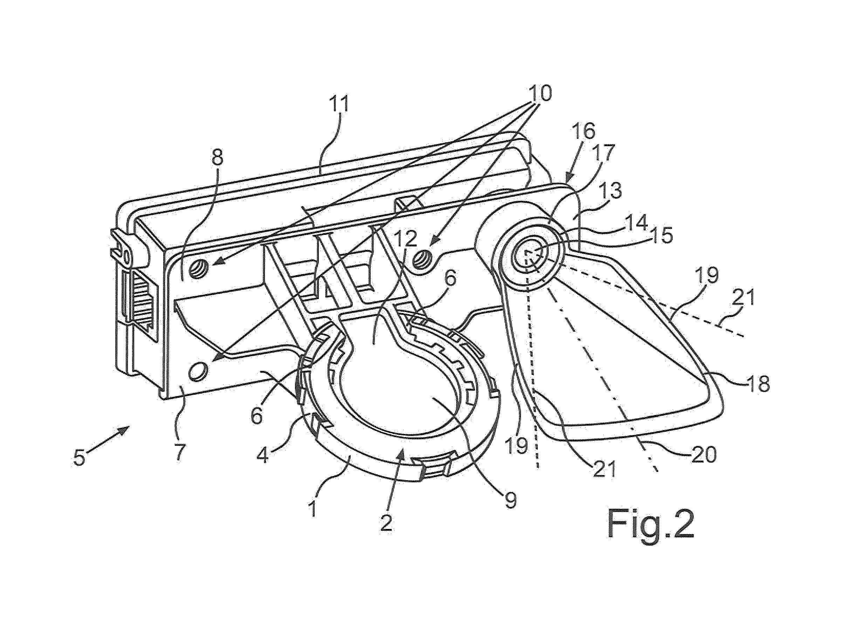

In Fig. 2, a retaining device 5 according to an embodiment is illustrated. It includes an annular frame 1, which can be adhered to the surface of a windscreen of a motor vehicle with its front side 2. In the present embodiment, the retaining device 5 is attached to the windscreen exclusively via the frame 1, The frame 1 is provided in the form of a ring, which has a recess 6 in circumferential direction, which has a width of for example 10° or 15°.

The frame 1 is formed integrally and as an inherently rigid element and for example of plastic.

The retaining device 5 furthermore includes a support 7 separate from the frame 1, which has a retaining part 8 as well as a coupling part 9. The coupling part 9 is integrally connected to the retaining part 8. The retaining part 8 is formed in the form of a rectangular plate, which has fastening means 10 for attaching a camera 11. Here, the fastening means 10 are formed as through-openings, through which screws can be inserted. Then, the camera 11 can be attached with these screws.

The support 7 is for example formed of plastic.

The coupling part 9 protrudes from the retaining part 8, which is plate-like and circularly formed in the embodiment according to Fig. 2. The coupling part 9 is connected to the retaining part 8 via a leg 12. The leg 12 extends in the plane of the frame 1 in radial direction through the recess 6 of the frame 1.

If the frame 1 is attached to the windscreen, thus, the rain and/or light sensor 3 can be received in the frame 1 - as illustrated in Fig. 1 - and be attached by means of the fastening element 4. Now, in the example according to Fig. 2, it is provided that either the sensor 3 or else the coupling part 9 can optionally be received in the frame 1 and attached with the fastening element 4. Namely, the coupling part 9 substantially has the same geometric shape as the sensor 3 and can also be inserted into the frame 1 and be attached on the backside by means of the fastening element 4.

Alternatively, the frame 1 can also be configured such that both the sensor 3 and the coupling part 9 can be inserted and attached with the fastening element 4 at the same time. In this embodiment too, it can be provided that the sensor 3 and the coupling part 9 can be individually inserted into the frame 1 and attached with the fastening element 4.

If both the sensor 3 and the coupling part 9 are inserted into the frame 1 at the same time, thus, first, the sensor 3 is pressed against the windscreen and subsequently the coupling part 9 is inserted. Then, both parts are pressed against each other and against the windscreen with the fastening element 4 from the backside, wherein the fastening element 4 then only contacts the coupling element 9 from the backside.

Thus, different equipment variants of the vehicle with the same retaining device 5 are possible. In an equipment variant, for example, only the sensor 3 can be employed. In another equipment variant, only the support 7 can be inserted into the frame 1, on which the camera 11 is retained. In still another equipment variant, both the sensor 3 and the support 7 are attached in the frame 1.

In an edge region 13 of the plate-like retaining part 8, a recess 14 in the form of a through-opening is formed in this retaining part 8, through which a front part with a lens 15 of the camera 11 can be inserted. Thus, the camera 11 captures the environmental region in front of the motor vehicle through the recess 14. Therein, the camera 11 itself is disposed on the backside 16 of the retaining part 8 facing away from the windscreen and therein abuts on the backside 16 of the retaining part 8.

A channel-shaped screen-off element 18 protrudes from an edge region 17 of the recess 14, which is formed in the form of a channel-like scoop and surrounds or bounds a field of view of the camera 11 in certain areas. The screen-off element 18 is brought into abutment with the surface of the windscreen with its edges 19 such that the screen-off element 18 covers the lens 15 against the interior of the vehicle and thus against the light of the interior. Thus, the images of the camera 11 are not affected by the light in the interior of the vehicle. Therein, the screen-off element 18 has a width increasing in a direction away from the camera 11 and therefore is formed tapered towards the camera 11 or the retaining part 8.

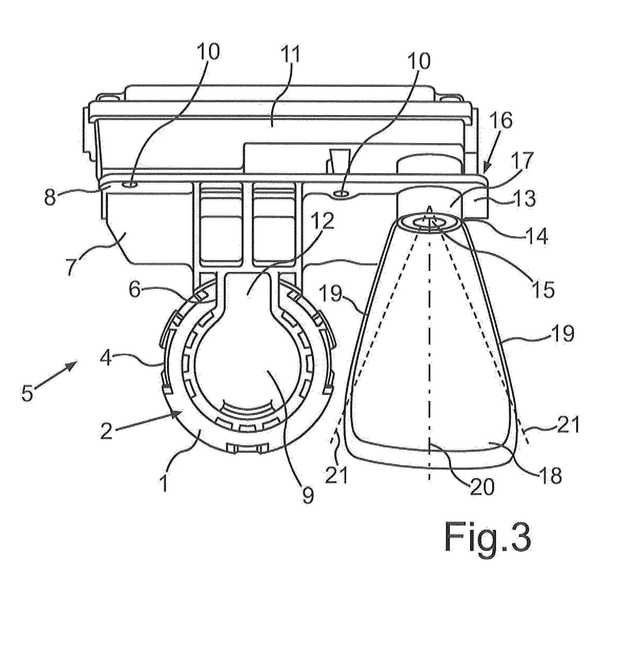

In Fig. 3, a plan view of the retaining device 5 with the camera 11 is illustrated in more detail. As is in particular apparent from Fig. 3, the lens 15 of the camera 11 has an optical axis 20, which extends centrally between the two edges 19 of the screen-off element 18. The field of view of the camera 11 is bounded with two lines 21. In Fig. 3, furthermore, the circular shape of the coupling part 9 can be particularly well perceived.

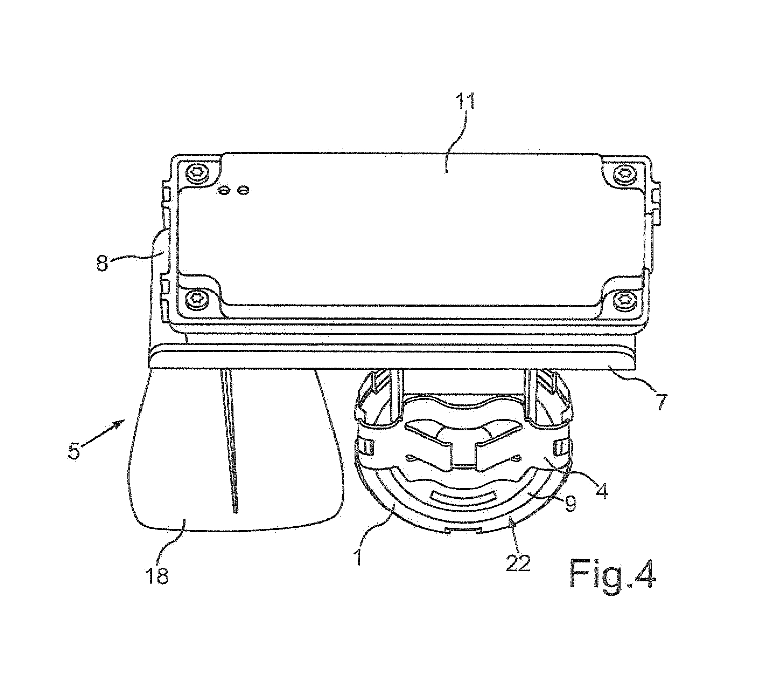

Fig. 4 now shows a bottom of the retaining device 5. Here, a backside 22 of the frame 1 is illustrated, which faces away from the windscreen and faces the interior of the vehicle. The coupling part 9 is received in the frame 1 from this backside 22 and attached with the fastening element 4. Therein, the fastening element 4 is a spring element, which is connected to the frame 1 for example via a locking connection on the opposing sides of the frame 1. Thus, the fastening element 4 presses the coupling part 9 towards the windscreen such that the coupling element 9 is pressed against the windscreen either directly or via a stop in the frame 1 or else via the additional rain and/or light sensor 3.

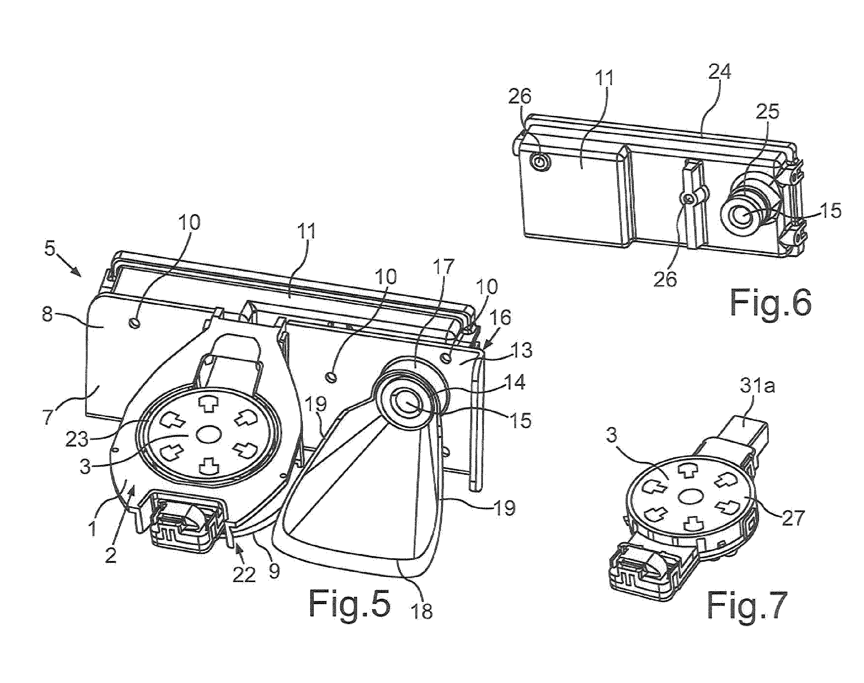

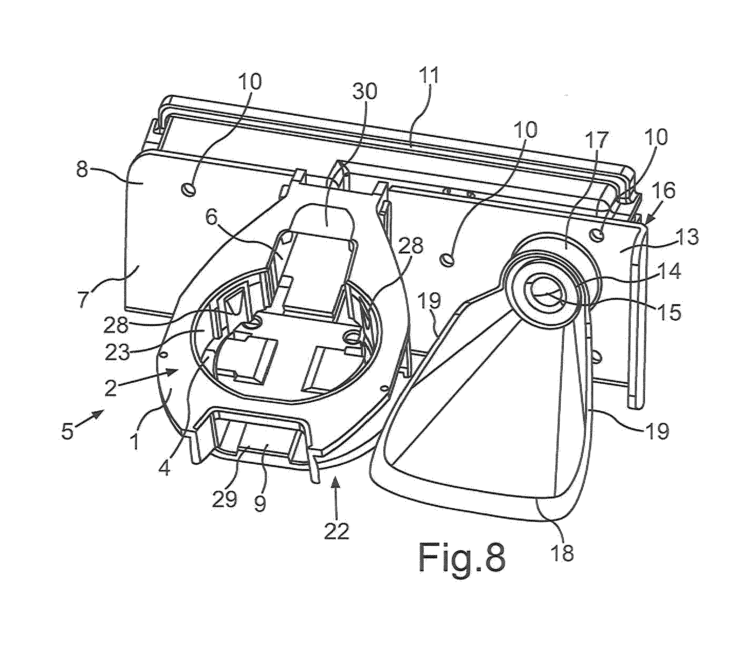

Fig. 5 shows a retaining device 5 according to a further embodiment of the invention. This retaining device 5 substantially corresponds to that according to Fig. 2, wherein the frame 1 is further developed such that it is formed slightly larger concerning the adhesive face on the one hand and also can receive collectively both the sensor 3 (rain and/or light sensor) and the coupling part 9 (Fig. 8) on the other hand. Thus, different equipment variants are possible with the retaining device 5 according to Fig. 5: only the camera 11 without the sensor 3 can be employed on the one hand; only the sensor 3 without the camera 11 can be employed on the other hand; in still a further equipment variant, both the sensor 3 and the camera 11 can be employed, as it is illustrated in Fig. 5.

In the example according to Fig. 5 too, the frame 1 has an annular inner circumference 23 such that the circular sensor 3 can be inserted into the frame and pressed against the windscreen by means of the fastening element 4 not illustrated in Fig. 5 from the backside 22.

The camera 11 alone is illustrated in Fig. 6. It has a camera housing 24, from which a front piece 25 with the lens 15 protrudes. For attaching to the retaining part 8, the camera housing 24 has recesses 26, into which e.g. screws can be screwed.

The rain and/or light sensor 3 alone is illustrated in Fig. 7. The sensor 3 has a base body 27, which is formed in the form of a circular disc, which can be received in the frame 1.

In Fig. 8, the retaining device 5 is illustrated in an equipment variant without the sensor 3. Here, the plate-like and circular coupling part 9 in the form of a disc is particularly well perceivable, which has extensions 28 or arms in the present embodiment, which protrude from a plate-like and circular base body 29 of the coupling part 9 towards the windscreen. Optionally, these extensions 28 can be received in corresponding pockets of the frame 1, which can be formed on the inner circumference 23 of the frame. Optionally, a stop can also be formed in these pockets, up to which the extensions 28 can be introduced into the respective pocket. The coupling part 9 is therefore not directly supported against the windscreen, but on the frame 1 itself. The coupling part 9 is attached to the frame 1 by means of the fastening element 4 from the backside 22.

In order to provide the increased adhesive face of the frame 1, the recess 6 is spanned by means of a thin leg 30 in circumferential direction, which additionally can be adhered to the windscreen. Thus, overall, a larger adhesive face arises such that the retaining force is also increased. An extension 31 a of the sensor 3 (see Fig. 7) can still be received in the recess 6.

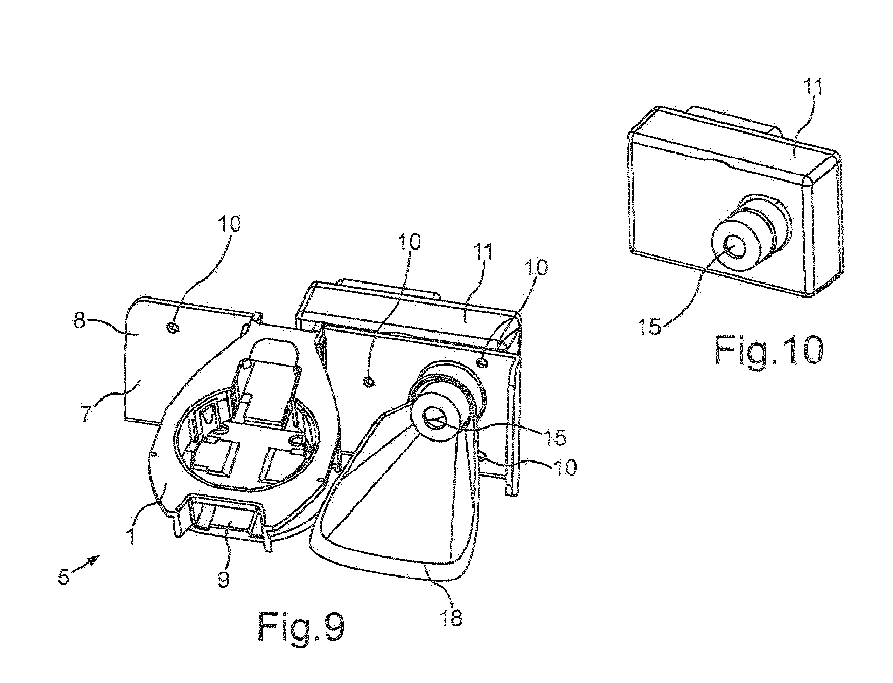

According to Fig. 9 and 10, a camera 11 can also be attached to the retaining device 5 according to Fig. 8, which has another shape than the camera 11 according to Fig. 6. Thus, the retaining device 5 can be employed universally for very different camera types, which is for example allowed by provision of corresponding fastening means 10. Namely, openings 10 for very different types of the camera 11 can be provided. Thereby too, the number of the equipment variants, in which the retaining device 5 can be employed, increases.

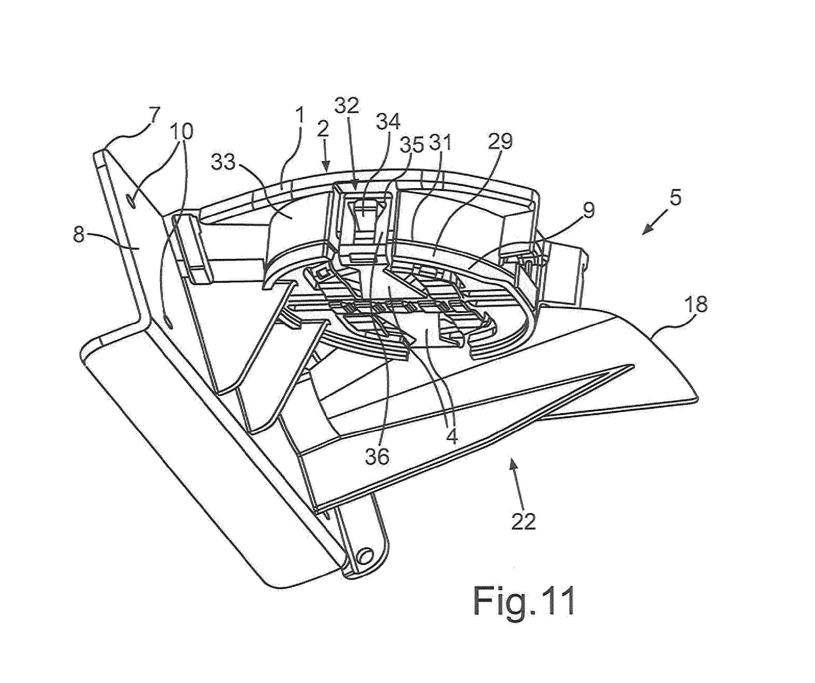

In Fig. 11, the retaining device 5 is illustrated from the backside 22. As is apparent from Fig. 11, the circular base body 29 of the coupling part 9 abuts on a front edge 31 or an axial front side of the frame 1 in axial direction, while only the extensions 28 (Fig. 8) are located within the frame 1. The edge 31 too can constitute a stop for the coupling part 9, up to which the coupling part 9 can be inserted into the frame 1 with its extensions 28.

The coupling part 9 is attached by means of the fastening element 4 from the backside 22, which is fixed to the frame 1 via a locking connection 32. For this purpose, detents 34 are formed on an outer circumference 33 of the frame 1 on sides opposing each other, which can lock in openings 35 in tabs 36 of the fastening element 4. This locking connection 32 can then be again detached without much effort without having to destroy the fastening element 4 or else the frame 1. In this manner, the vehicle can optionally be subsequently upgraded with the sensor 3. Here, the locking connection 32 is detached, and then the sensor 3 is inserted into the frame 1, and subsequently the coupling part 9 is again inserted into the frame 1 and attached with the fastening element 4.

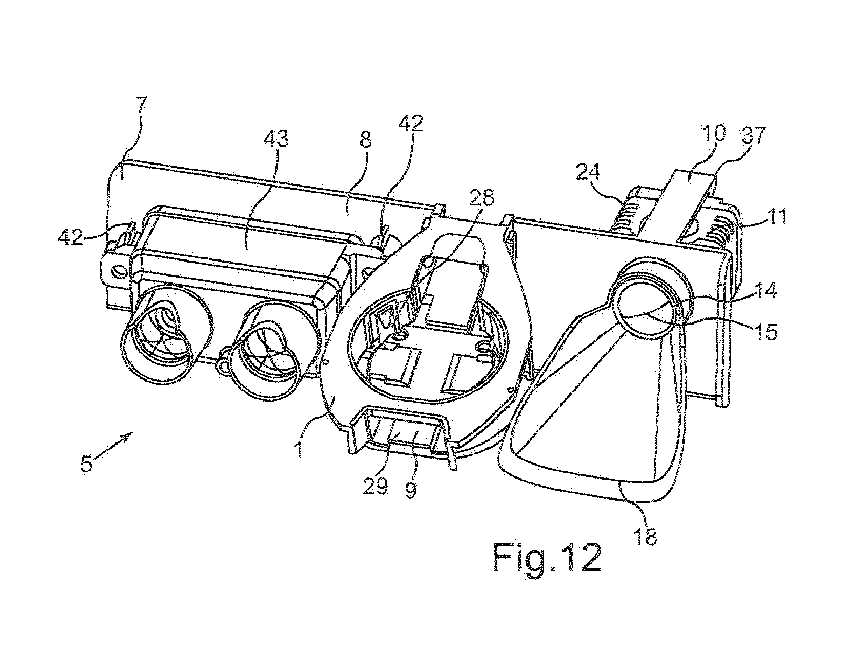

In Fig. 12, a further embodiment of the retaining device 5 is shown in perspective representation. Here too, the support 7 has a plate-like retaining part 8, but which is now designed slightly longer than the retaining part 8 according to Fig. 8. The coupling part 9 and the screen-off element 18 correspond to the coupling part 9 and the screen-off element 18 according to Fig. 8, respectively. For attaching a camera 11, now, fastening means 10 are provided, which have a locking element 37. The attachment of the camera 11 is now effected with the aid of a locking connection. In the embodiment according to Fig. 12, there is also used another shape of the camera 11, namely a camera 11 with a smaller, cuboid-shaped housing 24. The lens 15 of the camera 11 is also inserted through the recess 14 in the retaining part 8, such that the lens 15 protrudes on the opposing front side.

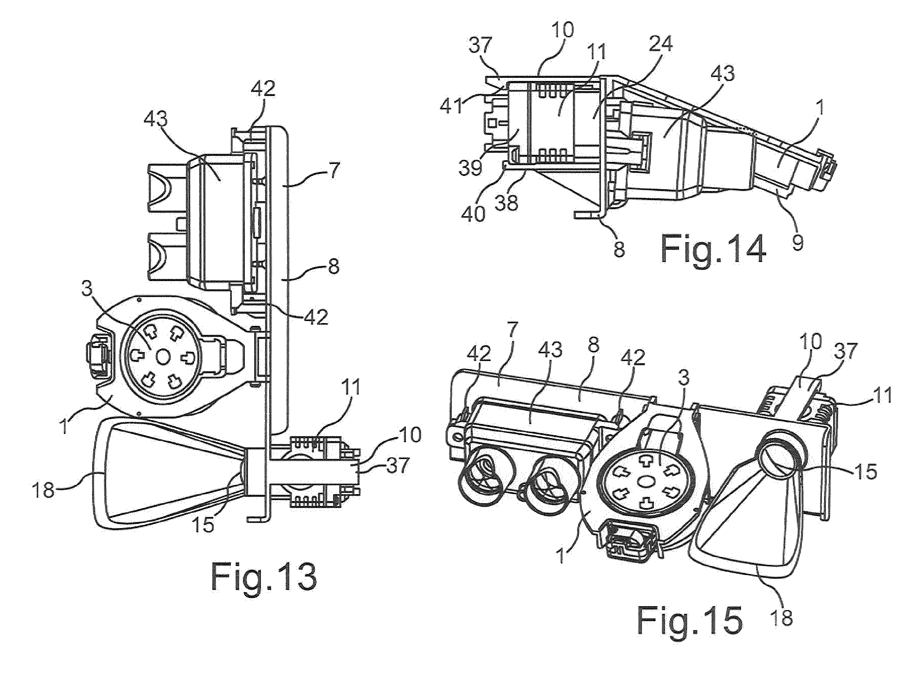

The locking connection between the camera 11 and the retaining part 8 is illustrated in a side view in Fig. 14. The camera 11 is supported on a plate 38 perpendicularly protruding from the retaining part 8 and inserted into the recess 14 in the retaining part 8. Upon inserting the lens 15 into the recess 14, a rear wall 39 of the camera housing 24 passes a nose 40 formed at the free end of the plate 38, which grips behind the camera 11 on the rear wall 39. The locking element 37, which is resiliently configured and also has a nose 41 at the free end, extends parallel to the plate 38. This nose 41 then locks on the edge of the rear wall 39 such that the camera 11 is received between the plate 38 on the one hand and the strip-shaped locking element 37 and locked there.

With reference again to Fig. 12, further fastening means 42 in the form of through-openings for screws are provided on the retaining part 8 on the side of the coupling part 9 opposing the recess 14. By these fastening means 42, a further sensor 43 can be attached to the retaining part 8, namely for example a Lidar sensor. The sensor 43 is mounted on the front side of the retaining part 8, which faces the windscreen. By providing the fastening means 42 in the form of openings, the sensor 43 can be reversibly detachably connected to the retaining part 8, such that the sensor 43 can be employed only in selected equipment variants of the vehicle and can also be subsequently installed in the vehicle.

A plan view of the retaining device 5 is illustrated in Fig. 13, while the same retaining device 5 is shown in Fig. 15 in perspective representation. In Fig. 13 and 15, an equipment variant is shown, in which all of the three sensors are employed, namely the sensor 3, the camera 11 as well as the sensor 43. All of the sensors are retained on the windscreen via the frame 1. In other equipment variants, optionally, one or more sensors can be omitted. Thus, the camera 11 and/or the sensor 3 and/or the sensor 43 can for example be omitted. However, in all of the possible equipment variants, the same retaining device 5 is used.

The sensor device as it is illustrated in Fig. 12 or Fig. 15, can be covered from the backside by means of a lid 44 such that the retaining device 5 is covered by the windscreen on the one hand and by the lid 44 on the other hand. The retaining device 5 and the sensors thus are located within a clearance formed between the windscreen on the one hand and the lid 44 on the other hand. Therein, the lid 44 is brought into abutment with the windscreen with its edge 45. Channel-shaped molded parts can also be molded on the lid 44, which surround the field of view of the sensor 43 in certain areas. Therein, separate molded parts 46 can be provided for the transmitter and for the receiver of the sensor 43.

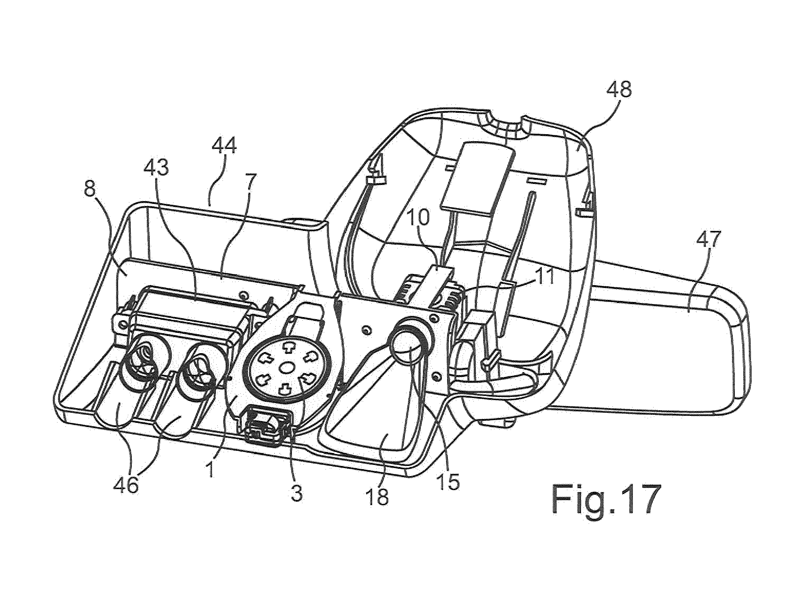

The retaining device 5 is illustrated in Fig. 17 in the assembled state. As is apparent from Fig. 17, both the support 7 and the frame 1 are within a recess formed in the lid 44. The lid 44 itself is also connected to a rearview mirror 47. A housing 48 of the rearview mirror 47 can optionally also be adhered to the windscreen.

In all of the embodiments, the retaining device 5 additionally can also have a common connection, via which all of the sensors 3, 11, 43 can be connected to components on the vehicle side. Via this connection, the sensors can be supplied with electrical energy on the one hand; the sensors can for example also communicate with a controller on the vehicle side via the connection on the other hand. The sensors can be connected e.g. to a communication bus of the vehicle, for instance the CAN bus, via this common connection.

## Claims

1. Retaining device (5) for retaining a sensor device (3, 11, 43) on a pane of a motor vehicle, comprising:
- a frame (1) for attaching to a surface of the pane, wherein the frame (1) is formed for receiving a sensor (3), in particular a rain and/or light sensor, and
- a fastening element (4) for attaching the sensor (3) in the frame (1),
**characterized in that**
the retaining device (5) has a support (7) for attaching at least one further sensor (11, 43), wherein the support (7) has a coupling part (9), via which the support (7) can be attached to and/or in the frame (1).

2. Retaining device (5) according to claim 1,
**characterized in that**
the frame (1) is formed for receiving at least a region of the coupling part (9) and the fastening element (4) is formed for attaching the coupling part (9) in the frame (1).

3. Retaining device (5) according to claim 1 or 2,
**characterized in that**
the frame (1) is formed for simultaneously receiving both the sensor (3) and at least a region of the coupling part (9) and the fastening element (4) is formed for simultaneously attaching the sensor (3) and the coupling part (9) in the frame (1).

4. Retaining device (5) according to claim 1 or 2,
**characterized in that**
the frame (1) is formed for selectively receiving the sensor (3) or at least a region of the coupling part (9).

5. Retaining device (5) according to anyone of the preceding claims,
**characterized in that**
the coupling part (9) is plate-shaped, in particular circularly or annularly, formed.

6. Retaining device (5) according to anyone of the preceding claims,
**characterized in that**
the support (7) can be attached to the pane exclusively by means of the frame (1).

7. Retaining device (5) according to anyone of the preceding claims,
**characterized in that**
the fastening element (4) is resiliently formed.

8. Retaining device (5) according to anyone of the preceding claims,
**characterized in that**
the fastening element (4) can be reversibly detachably connected to the frame (1) by means of a locking connection (32).

9. Retaining device (5) according to anyone of the preceding claims,
**characterized in that**
even in absence of the sensor (3) in the frame (1), the coupling part (9) can be attached in and/or to the frame (1), in particular by means of the fastening element (4).

10. Retaining device (5) according to anyone of the preceding claims,
**characterized in that**
the support (7) has a plate-like retaining part (8) connected to the coupling part (9), which is formed for attaching the at least one further sensor (11, 43) to the support (7).

11. Retaining device (5) according to anyone of the preceding claims,
**characterized in that**
the support (7) is formed for retaining at least two further sensors (11, 43) separate from the sensor (3).

12. Retaining device (5) according to anyone of the preceding claims,
**characterized in that**
the support (7) has fastening means (10, 42) for attaching the at least one further sensor (11, 43), which have at least one locking element (37) and/or at least one opening (10, 42) for a screw.

13. Retaining device (5) according to anyone of the preceding claims,
**characterized in that**
the support (7) has fastening means (10) for attaching a camera (11) as further sensor.

14. Retaining device (5) according to claim 13,
**characterized in that**
a recess (14), in particular a through-opening, for a lens (15) of the camera (11) is formed in the support (7), in particular in the plate-like retaining part (8).

15. Retaining device (5) according to claim 14,
**characterized in that**
the support (7) has a channel-shaped screen-off element (18), which protrudes from an edge (17) of the recess (14) and extends towards the pane.

16. Retaining device (5) according to anyone of the preceding claims,
**characterized in that**
the support (7) has fastening means (42) for attaching a distance sensor (43), in particular an optical distance sensor (43).

17. Retaining device (5) according to anyone of the preceding claims,
**characterized in that**
the retaining device (5) has an electrical connection common to the at least two sensors (3, 11, 43) for connecting the sensors (3, 11, 43) to the vehicle.
